# DEMANDE DE BREVET EUROPEEN

(11) **EP 4 079 617 A1**
(43) Date de publication de la demande: **26.10.2022**
(21) Numéro de dépôt: 22168757.7
(22) Date de dépôt: 19.04.2022
(51) Int. Cl.: B62K 5/10, B62K 5/02, B60W 30/04, B62D 61/08, B62K 5/027, B62M 6/40

(54) **PROCÉDÉ D'INCLINAISON D'UN ENGIN DE MOBILITÉ INCLINABLE ET UNITÉ DE COMMANDE ASSOCIÉE**

(30) Priorité: 21.04.2021 FR 2104156
(71) Demandeur: Valeo Embrayages, 95892 Cergy Pontoise (FR)
(72) Inventeur: SIEGWART, Jean Baptiste, 38070 SAINT QUENTIN FALLAVIER (FR); CHANFRAY, Alexandre, 38070 SAINT QUENTIN FALLAVIER (FR); LAURENS, Christophe, 38070 SAINT QUENTIN FALLAVIER (FR)
(74) Mandataire: Valeo Powertrain Systems

(57) **Abrégé**

La présente invention concerne un procédé de commande d'un engin de mobilité (1) comportant une partie avant (70) avec une roue avant (21) et une partie arrière (80) avec deux roues arrières (22, 22'), la partie avant (70) est articulée par rapport au reste de l'engin (1), la liaison entre la partie avant (70) et la partie arrière (80) est réalisée avec un moyen de rotation (51), l'engin (1) comportant un moteur supplémentaire (52) et un élément de sécurité (53), le procédé permettant de contrôler l'inclinaison de la partie avant (70) par rapport à la partie arrière (80) par contrôle du moteur supplémentaire et de l'élément de sécurité, avec une unité de commande (90).

## Description

La présente invention concerne un procédé d'inclinaison d'un engin de mobilité inclinable, et plus précisément d'un engin de mobilité inclinable avec trois roues, du type tricycle.

Les engins de mobilités de la présente invention sont par exemple des engins de mobilité avec une roue avant et deux roues arrières, l'ensemble étant relié par l'intermédiaire d'un dispositif d'inclinaison permettant à la partie avant d'être inclinable. Plus précisément, les engins de mobilité de la présente invention sont par exemple des tricycles monoplaces ou biplaces tandem, ou des triporteurs.

Lors de la conduite le cadre de ces engins est soumis à la force centrifuge essentiellement due à la masse du conducteur et tend à s'incliner vers l'extérieur dans un virage. L'équilibre entre l'angle et la force centrifuge est instinctif pour le conducteur, l'angle d'inclinaison le plus stable est alors naturellement et rapidement atteint.

Il existe cependant certains cas où la partie avant doit être contrôlée afin d'éviter des situations dangereuses, et par exemple lors de basses vitesses ou à l'arrêt.

Il est donc important qu'un tel engin de mobilité comporte un système permettant de faire en sorte que l'inclinaison soit contrôlée et par conséquent non dangereuse pour éviter qu'une roue arrière se soulève.

La présente invention a donc pour objet de pallier un ou plusieurs des inconvénients des dispositifs de l'art antérieur en proposant un engin de mobilité comportant un système de contrôle d'inclinaison.

Pour cela la présente invention propose un procédé de commande d'un engin de mobilité comportant une partie avant avec une roue avant et une partie arrière avec deux roues arrières, la partie avant est articulée par rapport au reste de l'engin, la liaison entre la partie avant et la partie arrière est réalisée avec un moyen de rotation, l'engin comportant un moteur supplémentaire et un élément de sécurité, le procédé permettant de contrôler l'inclinaison de la partie avant par rapport à la partie arrière par contrôle du moteur supplémentaire et de l'élément de sécurité, avec une unité de commande.

Selon un mode de réalisation de l'invention, le procédé de commande d'un engin de mobilité comporte les étapes suivantes :
- mesure de la vitesse Ve de l'engin,
- comparaison de la vitesse Ve de l'engin avec une vitesse seuil Vs,
- détermination d'un angle d'inclinaison α optimal entre la partie avant et la partie arrière, et application de l'angle d'inclinaison α optimal selon une loi de commande.

Selon un mode de réalisation de l'invention, la loi de commande consiste à :
- maintenir la partie avant et la partie arrière de l'engin, sans inclinaison relative, pour des vitesses inférieures ou égales à une vitesse seuil Vs définie préalablement.
- maintenir la position la partie avant avec une valeur de l'angle d'inclinaison α optimal pour des vitesses supérieures à une vitesse seuil définie préalablement.

Selon un mode de réalisation de l'invention, la détermination de l'angle d'inclinaison α optimal est réalisé selon les étapes suivantes :
- si Ve est inférieure ou égale à Vs, l'unité de commande contrôle le moteur de façon à ce qu'il agisse sur une transmission pour réduire l'inclinaison et atteindre un angle α égale à zéro, le moteur ne fonctionne plus, l'élément de sécurité est enclenché.
- si Ve est supérieure à Vs, et si la trajectoire de l'engin est droite, l'unité de commande désactive l'élément de sécurité et contrôle le moteur de façon à ce qu'il n'exerce pas de force.
- si Ve est supérieure à Vs, et si lorsque la trajectoire de l'engin est courbe, l'unité de commande désactive l'élément de sécurité et contrôle le moteur de façon à maintenir un angle d'inclinaison α pour lequel l'engin est stable.

Selon un mode de réalisation de l'invention, le couple appliqué sur le moteur est défini en fonction de la valeur α -β et de Ve de façon à limiter l'aide du moteur et ainsi optimiser son utilisation, β étant l'angle de mesuré entre le cycliste et l'axe verticale Xv de l'engin. Selon un mode de réalisation de l'invention, la vitesse seuil est la vitesse en dessous de laquelle il est nécessaire d'avoir un angle d'inclinaison α égale à zéro pour que la partie avant soit alignée avec la partie arrière, et au-delà de laquelle, il est nécessaire de contrôler l'angle d'inclinaison α pour éviter le basculement de l'engin.

Selon un mode de réalisation de l'invention, la vitesse seuil Vs est égale à 6 km/h.

L'invention concerne également une unité de commande mettant en œuvre le procédé selon l'invention.

L'invention concerne également un engin de mobilité comportant une unité de commande selon l'invention.

Selon un mode de réalisation de l'invention, l'engin de mobilité est un tricycle, et par exemple un tricycle à assistance électrique.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une représentation schématique d'un engin de mobilité concerné par l'invention,
- la [Fig. 2] est une représentation schématique d'un engin de mobilité selon l'invention vue de dessus,
- la [Fig. 3] est une représentation schématique des angles et forces intervenant dans le système de contrôle selon l'invention,
- la [Fig. 4] est une représentation schématique du procédé selon l'invention.

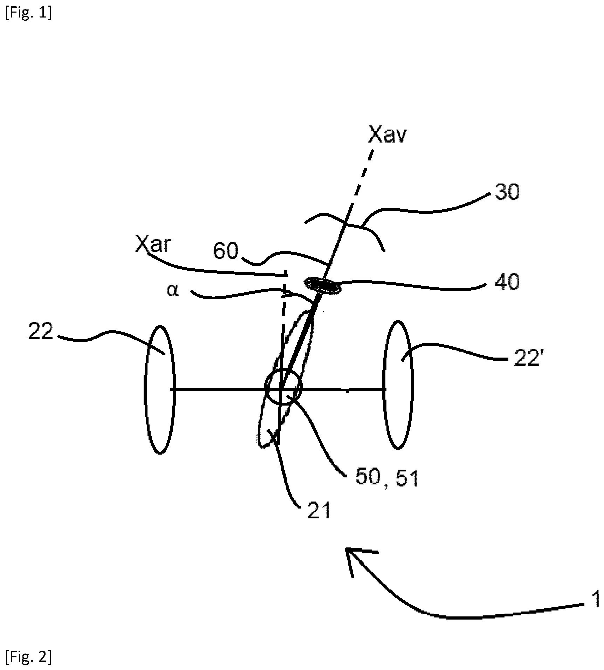

La [Fig. 1] illustre un engin 1 de mobilité selon l'invention. L'engin 1 comporte une roue avant 21 et deux roues arrière 22, 22'.

Selon un mode de réalisation de l'invention, l'engin 1 de mobilité est un tricycle.

Selon un mode de réalisation de l'invention, le tricycle est à assistance électrique et comporte un dispositif de changement de vitesse et un moteur électrique. Le moteur électrique est agencé pour assurer une partie de la propulsion de l'engin 1.

L'engin 1 comporte au moins trois roues 21, 22, 22', dont deux roues auxquelles est fournie une force motrice. La force motrice est fournie par l'intermédiaire de deux pédales, ou équivalent, tournant autour d'un axe de pédalier qui entraîne les roues arrières par exemple par une chaîne, ou tout autre moyen de transmission lors de son utilisation.

L'engin comporte un guidon 30 permettant d'orienter la roue avant 21. La roue avant 21 est reliée aux deux roues arrières 22, 22'. Les deux roues arrières 22, 22' sont également reliées entre-elles.

Selon un mode de réalisation de l'invention, l'engin 1 comporte un moyen d'assise 40 pour l'utilisateur.

La roue avant 21, le guidon 30 et le moyen d'assise 40 sont reliés entre eux par un cadre 60, formant la partie avant 70 de l'engin 1. Cette partie avant 70 avec cadre est inclinée lors de l'utilisation de l'engin 1. Cette partie comporte une articulation au niveau de l'axe Xg du guidon 30 illustré [Fig. 1]. Cette articulation 31 permet d'orienter la roue avant vers la droite ou la gauche par rapport à la direction d'utilisation de l'engin 1.

Les roues arrières 22, 22' sont disposées au niveau de la partie arrière 80 de l'engin 1. L'engin 1 comporte également une unité de pilotage ainsi que plusieurs capteurs situés par exemple au niveau du pédalier, sur le cadre du vélo ou au niveau d'une roue.

Selon un mode de réalisation de l'invention, l'engin 1 comporte également un dispositif de stockage d'énergie sous forme d'une batterie, un système d'éclairage, un pédalier, un système de localisation et/ou navigation ainsi qu'un système interface homme-machine comportant notamment un écran tactile apte à afficher des informations pour et/ou prendre en compte les demandes dudit utilisateur.

Les roues 21, 22, 22' sont munies d'un système de freinage, comportant notamment des freins à disque.

L'engin 1 comporte un dispositif de changement de vitesse.

La liaison entre la partie avant 70 et la partie arrière 80 est réalisée avec un moyen de rotation 51. Ce moyen de rotation 51 permet le pivotement de la partie avant 70 par rapport à la partie arrière 80 qui forme un angle d'inclinaison α.L'angle α est défini entre l'axe Xav de la partie avant et l'axe Xar de la partie arrière 80. L'axe de rotation est confondu avec l'axe longitudinale Xe de l'engin allant de la roue avant 21 vers un point central entre les deux roues arrières 22, 22'.

Dans le cadre de l'invention, l'engin comporte un système de transmission et inclinaison 50 disposé entre la partie avant 70 et la partie arrière 80 de l'engin 1.

Dans le cadre de l'invention, l'engin comporte un moteur électrique supplémentaire 52. Ce moteur 52 est disposé entre les deux parties de l'engin 1 et permet de commander l'inclinaison α de la partie avant 70. Plus précisément, le moteur 52 fourni un effort pour maintenir une position de la partie avant 70 par rapport à la partie arrière 80.

Selon un mode de réalisation de l'invention, le moteur entraîne un élément de transmission pour atteindre un angle d'inclinaison α voulu en fonction de l'utilisation de l'engin 1. Selon un mode de réalisation de l'invention, l'angle d'inclinaison α maximal est de 20 degrés +/-5degrés.

L'engin 1 comporte également un élément de sécurité 53 permettant de bloquer la rotation de la partie avant 70 par rapport à la partie arrière 80, et ainsi d'empêcher l'inclinaison de la partie avant 70 de l'engin 1.

Selon un mode de réalisation de l'invention, l'élément de sécurité 53 agit sur un frein. Selon un mode de réalisation de l'invention, l'élément de sécurité 53 est disposé sur le cadre 60 de la partie avant 70 de l'engin 1, entre la partie avant 70 et la partie arrière 80. L'élément de sécurité 53 permet de bloquer la rotation de la partie avant 70 et la partie arrière 80, et de maintenir la partie avant 70 non inclinée. Selon un mode de réalisation de l'invention, lorsque la partie avant 70 n'est pas inclinée, l'angle d'inclinaison α est égal à zéro.

Dans le cadre de l'invention, le contrôle du moteur 52 supplémentaire et de l'élément de sécurité 53 est réalisé par un unité de commande 90.

L'unité de commande 90 permet d'optimiser l'angle d'inclinaison α quel que soit la vitesse de l'engin 1.

Selon un mode de réalisation de l'invention, l'unité de commande met en œuvre une loi de commande.

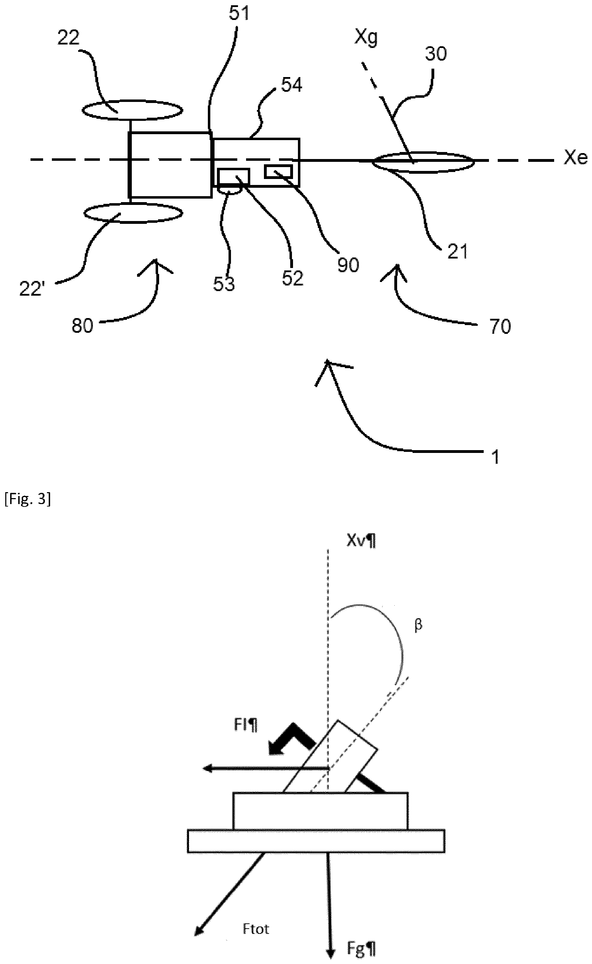

La loi de commande utilise trois valeurs illustrées [Fig. 3]:
- La valeur de l'angle d'inclinaison α entre la partie avant 70 et la partie arrière 80 de l'engin 1,
- La valeur de l'angle formé par le cycliste β par rapport à l'axe verticale Xv,
- La vitesse de l'engin Ve.

La loi de commande consiste à :
- maintenir la partie avant 70 et la partie arrière 80 de l'engin, sans inclinaison relative, pour des vitesses inférieures ou égales à une vitesse seuil Vs définie préalablement.
- maintenir la position la partie avant 70 selon une valeur de l'angle α et de la position verticale Xv de l'utilisateur pour des vitesses supérieures à une vitesse seuil Vs définie préalablement.

Dans le cadre de l'invention, la vitesse seuil est égale à 6 km/h. Selon un mode de réalisation de l'invention la vitesse est égale à 4 km/h. La vitesse seuil est la vitesse en dessous de laquelle il est nécessaire d'avoir un angle d'inclinaison α égale à zéro pour que la partie avant 70 soit alignée avec la partie arrière 80. La vitesse seuil Vs est la vitesse au-delà de laquelle, il est nécessaire de contrôler l'angle d'inclinaison α pour éviter le basculement de l'engin 1.

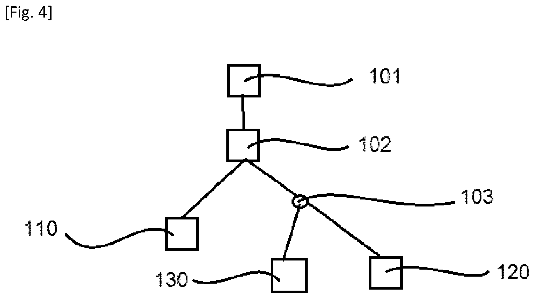

Plus précisément, l'unité de commande contrôle le moteur et ou l'élément de sécurité selon le procédé suivant [Fig. 4] :
- mesure 101 de la vitesse Ve de l'engin,
- comparaison 102 de la vitesse Ve de l'engin 1 avec la vitesse seuil Vs,
- si Ve est inférieure ou égale à Vs, alors l'unité de commande contrôle le moteur de façon à ce qu'il agisse sur une transmission pour réduire l'inclinaison et atteindre un angle α égale à zéro. Lorsque cette valeur est atteinte, le moteur ne fonctionne plus, et l'unité de commande actionne et enclenche l'élément de sécurité 53 pour maintenir la position de l'engin 1 sans effort du moteur 110.
- si Ve est supérieure à Vs, et lorsque le la trajectoire de l'engin 1 est droite 103, c'est-à-dire lorsque l'utilisateur ne tourne pas le guidon, seule la force de gravité Fg et la force d'accélération s'appliquent sur l'engin 1. Dans ce cas l'unité de commande désactive l'élément de sécurité et contrôle le moteur de façon à ce qu'il n'exerce pas de force 120. L'engin 1 est stable.
- si Ve est supérieure à Vs, et lorsque la trajectoire de l'engin 1 est courbe, c'est-à-dire lorsque l'utilisateur tourne le guidon 103, une force latérale FI s'applique sur l'engin 1 avec la force de gravité Fg, en plus de la force d'accélération. L'unité de commande désactive l'élément de sécurité 53 et contrôle le moteur de façon à maintenir un angle d'inclinaison α pour lequel l'engin 1 est stable. L'angle α d'inclinaison optimal est déterminé pour que la résultante Ftot des forces FI et Fg soit dans le plan du vélo 130.
- Le couple appliqué sur le moteur est alors défini en fonction de la valeur α -β et de Ve de façon à limiter l'aide du moteur et ainsi optimiser son utilisation. L'objectif étant d'appliquer un couple qui s'oppose à la variation de l'angle d'inclinaison α de part et d'autre de sa valeur optimale.

Selon un mode de réalisation de l'invention, le moteur supplémentaire 52 est disposé au niveau d'un châssis 54 intermédiaire.

Le châssis 54 intermédiaire est fixé à la partie avant 70 de l'engin 1, et est en rotation via le moyen de rotation 51, avec la partie arrière 80 de l'engin 1.

Un engin 1 de mobilité équipé d'une telle unité de commande permet une inclinaison optimisée de la partie avant en fonction de l'utilisation de l'engin 1.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Procédé de commande d'un engin de mobilité (1) comportant une partie avant (70) avec une roue avant (21) et une partie arrière (80) avec deux roues arrières (22, 22'), la partie avant (70) est articulée par rapport au reste de l'engin (1), la liaison entre la partie avant (70) et la partie arrière (80) est réalisée avec un moyen de rotation (51), l'engin (1) comportant un moteur supplémentaire (52) et un élément de sécurité (53), le procédé permettant de contrôler l'inclinaison de la partie avant (70) par rapport à la partie arrière (80) par contrôle du moteur (52) supplémentaire et de l'élément de sécurité (53), avec une unité de commande (90).

2. Procédé de commande d'un engin de mobilité (1) selon la revendication 1, comportant les étapes suivantes :
- mesure (101) de la vitesse Ve de l'engin (1),
- comparaison (102) de la vitesse Ve de l'engin (1) avec une vitesse seuil Vs,
- détermination d'un angle d'inclinaison α optimal entre la partie avant (70) et la partie arrière (80), et application de l'angle d'inclinaison α optimal selon une loi de commande.

3. Procédé de commande d'un engin de mobilité (1) selon la revendication 2, dans lequel la loi de commande consiste à :
- maintenir la partie avant (70) et la partie arrière (80) de l'engin, sans inclinaison relative, pour des vitesses inférieures ou égales à une vitesse seuil Vs définie préalablement.
- maintenir la position de la partie avant (70) avec une valeur de l'angle d'inclinaison α optimal pour des vitesses supérieures à une vitesse seuil définie préalablement.

4. Procédé de commande d'un engin de mobilité (1) selon une des revendications 2 ou 3, dans lequel la détermination de l'angle d'inclinaison α optimal est réalisée selon les étapes suivantes :
- si Ve est inférieure ou égale à Vs (110), l'unité de commande contrôle le moteur de façon à ce qu'il agisse sur une transmission pour réduire l'inclinaison et atteindre un angle α égal à zéro, le moteur (52) ne fonctionne plus, l'élément de sécurité (53) est enclenché.
- si Ve est supérieure à Vs (120), et si la trajectoire de l'engin (1) est droite, l'unité de commande désactive l'élément de sécurité (53) et contrôle le moteur (52) de façon à ce qu'il n'exerce pas de force.
- si Ve est supérieure à Vs (130), et lorsque la trajectoire de l'engin (1) est courbe, l'unité de commande désactive l'élément de sécurité (53) et contrôle le moteur (52) de façon à maintenir un angle d'inclinaison α pour lequel l'engin (1) est stable.

5. Procédé de commande d'un engin de mobilité (1) selon la revendication 4, dans lequel un couple appliqué sur le moteur est défini en fonction de la valeur α -β et de Ve de façon à limiter l'aide du moteur et ainsi optimiser son utilisation, β étant l'angle mesuré entre un cycliste et l'axe verticale Xv de l'engin (1).

6. Procédé de commande d'un engin de mobilité (1) selon une des revendications 2 à 5, dans lequel la vitesse seuil est la vitesse en dessous de laquelle il est nécessaire d'avoir un angle d'inclinaison α égale à zéro pour que la partie avant (70) soit alignée avec la partie arrière (80), et au-delà de laquelle, il est nécessaire de contrôler l'angle d'inclinaison α pour éviter le basculement de l'engin (1).

7. Procédé de commande d'un engin de mobilité (1) selon une des revendications 2 à 6, dans lequel la vitesse seuil Vs est égale à 6 km/h.

8. Unité de commande mettant en œuvre le procédé selon une des revendications 1 à 7.

9. Engin (1) de mobilité comportant une unité de commande selon la revendication 8.

10. Engin de mobilité (1) selon la revendication 9, l'engin (1) de mobilité étant un tricycle, et par exemple un tricycle à assistance électrique.
